# EUROPEAN PATENT SPECIFICATION

(11) **EP 1 607 226 B1**
(45) Date of publication and mention of the grant of the patent: **04.01.2012**
(21) Application number: 04723390.3
(22) Date of filing: 25.03.2004
(51) Int. Cl.: B41J 3/36

(54) **PRINTING CONTROLLER AND PRINTING CONTROL PROGRAM**
DRUCKSTEUERUNG UND DRUCKSTEUERPROGRAMM
DISPOSITIF ET PROGRAMME DE COMMANDE D'IMPRESSION

(30) Priority: 27.03.2003 JP 2003089175
(43) Date of publication of application: 21.12.2005
(73) Proprietor: Brother Kogyo Kabushiki Kaisha, Nagoya-shi, Aichi-ken 467-8561 (JP)
(72) Inventor: KOIE, Kazuaki, BROTHER KOGYO K.K., Mizuho-ku, Nagoya-shi Aichi-ken 467-8562 (JP); UENO, Hideo, BROTHER KOGYO K. K., Mizuho-ku, Nagoya-shi Aichi-ken 467-8562 (JP); OKOCHI, Hajime, BROTHER KOGYO K. K., Mizuko-ku, Nagoya-shi, Aichi 467-8562 (JP); SAWADA, Akihiro, BROTHER KOGYO K. K., Mizuho-ku, Nagoya-shi, Aichi 467-8562 (JP)
(74) Representative: Materne, Jürgen
(86) International application number: PCT/JP2004/004236
(87) International publication number: WO 2004/085162

(56) References cited:
- EP-A- 0 768 611
- EP-A- 1 201 444
- EP-A- 1 321 298
- JP-A- 9 104 135

## Description

### TECHNICAL FIELD

The present invention relates to a print control device which is used for printing a character string including characters and/or symbols on a plurality of labels arranged along the length of a long tape-like print medium.

### BACKGROUND OF THE INVENTION

A tape printing device capable of printing a character string including characters and/or symbols on a long tape-like print medium has been described in Japanese Patent Provisional Publication No.HEI05-177905. The tape printing device of the Publication has a line feed function for separating a character string (including characters arranged in a tape lengthwise direction) into a plurality of lines inside a block (an area partitioned by imaginary lines extending in a tape width direction) and a block feed function for separating a character string (including characters arranged in the tape lengthwise direction) into a plurality of adjoining blocks arranged in the tape lengthwise direction. By the combined use of the line feed function and the block feed function, enhanced expressiveness can be given to the character string printed on the tape.

In recent years, long tape-like print media having a plurality of labels arranged in a lengthwise direction (e.g. the so-called die cut tape made of a print sheet having dividing lines (for dividing labels as the targets of printing from other peripheral areas) formed thereon and a strippable sheet which are stacked up to be strippable) and tape printing devices capable of printing a character string including characters and/or symbols on the labels on such tape-like print media have been on the market. However, even a tape printing device having the aforementioned line feed function and block feed function is not capable of separating a character string into a plurality of character strings and printing the separated character strings on different labels arranged on die cut tape, respectively. Therefore, in order to print different character strings on different labels by use of such a tape printing device, the user has to repeat an operation necessary for one label (e.g. inputting a character string to be printed on a label and pressing a print key) for the number of labels. Such repetitive work is very troublesome to the user.

From EP 1 201 444 a print control device according to the preamble of claim 1, a print control program according to the preamble of claim 4, and a print control method according to the preamble of claim 7 can be taken. A separation point/condition may be added or deleted, wherein alternative separation points can be used, however, the user has no possibility to choose from alternative separation conditions.

It is therefore the primary object of the present invention to provide a print control device, a print control method and a print control program making it possible to print character strings on a plurality of labels (arranged on a long tape-like print medium along the length of the print medium) with a smaller number of operations.

In accordance with an aspect of the present invention, there is provided a print control device as defined in claim 1.

By the above configuration, it becomes possible to print character strings, obtained by separating the character string stored in the character string storage means at the separating positions detected based on the separation condition, on different labels respectively. Therefore, after the character string to be printed on a plurality of labels has been inputted in a lump, the user has only to perform a print trigger operation (e.g. pressing of a print key) once in order to complete the printing on a plurality of labels, by which the operation load on the user can be reduced significantly.

In this specification, the "separation condition" may include the existence of a particular character or symbol, a sequence of characters/symbols arranged in a prescribed order, etc. The "separating positions detected based on the separation condition" can include a position immediately before or after a particular character or symbol, a position a prescribed number of characters away from a particular character or symbol, a position immediately before or after a sequence of characters/symbols arranged in a prescribed order, a position a prescribed number of characters away from a sequence of characters/symbols arranged in a prescribed order, a position immediately before or after an n-th (n: prescribed number) character in a sequence of characters/symbols arranged in a prescribed order, etc.

In accordance with another aspect of the present invention, there is provided a print control program as defined in claim 4.

By the above configuration, it becomes possible to print character strings, obtained by separating the character string stored in the character string storage means at the separating positions detected based on the separation condition, on different labels respectively. Therefore, after the character string to be printed on a plurality of labels has been inputted in a lump, the user has only to perform a print trigger operation (e.g. pressing of a print key) once in order to complete the printing on a plurality of labels, by which the operation load on the user can be reduced significantly.

In accordance with another aspect of the present invention, there is provided a print control method as defined in claim 7.

By the above configuration, it becomes possible to print character strings, obtained by separating the character string stored in the character string storage means at the separating positions detected based on the separation condition, on different labels respectively. Therefore, after the character string to be printed on a plurality of labels has been inputted in a lump, the user has only to perform a print trigger operation (e.g. pressing of a print key) once in order to complete the printing on a plurality of labels, by which the operation load on the user can be reduced significantly.

### BRIEF DESCRIPTION OF THE DRAWINGS

Fig. 1 is an external view of a tape printing device including an image arrangement device in accordance with an embodiment of the present invention.
Fig. 2 is a block diagram showing the composition of a control system of the tape printing device of Fig. 1.
Fig. 3 is a schematic diagram showing a specific example of printing by the tape printing device of Fig. 1.
Fig. 4 shows an example of text data for obtaining the printout of Fig. 3.
Fig. 5 is a flow chart showing an overall process executed by the tape printing device of Fig. 1.
Fig. 6 is a flow chart showing the details of a separation condition setting process shown in Fig. 5.
Fig. 7 is a flow chart showing the details of a print process shown in Fig. 5.

### BEST MODE FOR CARRYING OUT THE INVENTION

Referring now to the drawings, a description will be given in detail of a preferred embodiment in accordance with the present invention.

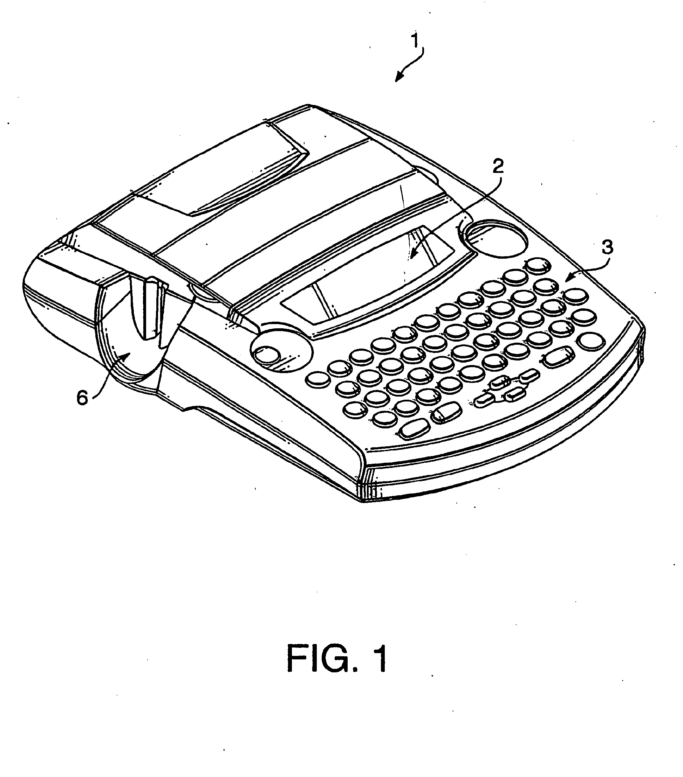

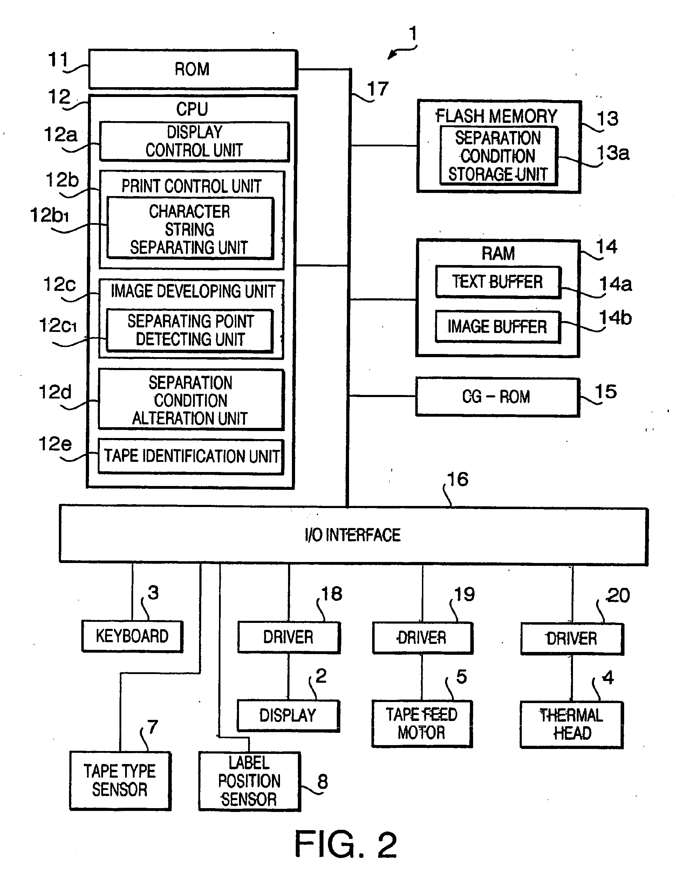

Fig. 1 is an external view of a tape printing device 1 including a print control device in accordance with an embodiment of the present invention. As shown in Fig. 1, the tape printing device 1 has a display 2 and a keyboard 3 which are arranged in a front part of its top surface. The rear part of the tape printing device 1 is provided with a cover which is openable and closable. Inside the cover, an unshown cassette storage part, including a thermal head 4 and a tape feed motor 5 (see Fig. 2), is placed.

The display 2 is implemented by a monochrome liquid crystal display, for example. The keyboard 3 has text keys (used for inputting characters to be printed), cursor keys (used for moving a cursor), a decision key, a print key, etc. The thermal head 4 has a number of heating elements arranged in a direction. The tape feed motor 5 is a DC motor for rotating various rollers for feeding print tape.

A type of print tape as the print medium used for the tape printing device 1 is the so-called die cut tape, for example. The die cut tape includes a long tape-like print sheet (having a print surface (having a plurality of labels arranged in the lengthwise direction, on which characters and/or symbols will be printed) on its front and an adhesive material layer on its back) and a strippable sheet (having a releasable surface processed with silicone resin, etc.) which are stacked up to be strippable. The die cut tape is rolled up and stored in a tape cassette. The tape cassette is detachably loaded in the cassette storage part of the tape printing device 1.

The die cut tape is exposed from the tape cassette on a lateral face of the tape cassette, and the printing on each label of the die cut tape is carried out by the thermal head 4 at the exposing part. The die cut tape pulled out from the tape cassette (according to the rotation of the tape feed motor 5) and printed on by the thermal head 4 is cut by an unshown tape cutter. The die cut tape cut off by the tape cutter is ejected from an outlet 6. Each label (having an adhesive back surface) peeled away from the ejected die cut tape can be stuck on an arbitrary object, article, etc.

Another type of print tape used for the tape printing device 1 is normal long tape. The long tape is stored in a tape cassette having substantially the same configuration as the tape cassette for the die cut tape. The tape cassettes for the two types of print tapes are substantially identical with each other, except for an arrangement pattern of cylindrical concavities formed on the base of each tape cassette.

The tape printing device 1 is equipped with a tape type sensor 7 (see Fig. 2) having a plurality of needle-like projections. The needle-like projections protrude from a cassette supporting surface of the cassette storage part when no tape cassette is in the cassette storage part. When a tape cassette is loaded in the cassette storage part, the needle-like projections are selectively pressed by the tape cassette and the tips of the pressed projections withdraw to the level of the cassette supporting surface. Since a concavity/convexity pattern made by the pressed projections varies depending on which type of tape cassette is loaded in the cassette storage part, the type of print tape stored in the tape cassette loaded in the cassette storage part can be detected based on a signal outputted by the tape type sensor 7.

On a surface of the strippable sheet of the die cut tape, marks indicating the positions of the labels are printed. The tape printing device I is equipped with a label position sensor 8 (see Fig. 2) as an optical sensor for reading the marks. Based on detection of the marks by the label position sensor 8, the tape printing device 1 can correctly place the front end of each label at a prescribed position and start the printing of the character string from a position (on the label) a preset distance away from the front end.

Next, the internal composition of the tape printing device 1 will be described below. Fig. 2 is a block diagram showing the composition of a control system of the tape printing device 1. In addition to the display 2, the keyboard 3, the thermal head 4, the tape feed motor 5, the tape type sensor 7 and the label position sensor 8 which have been explained above, the tape printing device 1 includes a ROM (Read Only Memory) 11, a CPU (Central Processing Unit) 12, a flash memory 13, a RAM (Random Access Memory) 14, a CG-ROM 15 and an I/O (input-output) interface 16 which are connected together by a bus 17 to communicate data. The I/O interface 16 is also connected to the keyboard 3, the tape type sensor 7, the label position sensor 8, the display 2 (via a driver 18), the tape feed motor 5 (via a driver 19) and the thermal head 4 (via a driver 20).

The ROM 11 stores programs such as a print control program for letting the tape printing device 1 function as the print control device. By the combination of the programs and hardware including the aforementioned CPU 12, the tape printing device 1 operates as described below.

The CPU 12 performs calculations according to various commands inputted through the keyboard 3. The CPU 12 functions as a display control unit 12a, a print control unit 12b, an image developing unit 12c, a separation condition alteration unit 12d, a tape identification unit 12e, etc. The details of the units 12a - 12e will be described later.

The flash memory 13 (a nonvolatile memory allowing data writing and deletion by the user) functions as a separation condition storage unit 13a. The separation condition storage unit 13a stores a condition for separating the character string (separation condition) which has been altered by the separation condition alteration unit 12d. The separation condition may include the existence of a prescribed symbol such as a separator (a line feed symbol, a block feed symbol, a comma (,), a slash (/), etc.) and a bar code symbol, the existence of a sequence of regularly increasing/decreasing numbers, the existence of a plurality of consecutive bar codes, etc.

In the RAM 14, a text buffer 14a and an image buffer 14b are formed. The text buffer 14a stores text data inputted from the keyboard 3 as character codes, together with the font type, character size, etc. of each character. The image buffer 14b stores bitmap data obtained by developing each character code stored in the text buffer 14a by the image developing unit 12c.

The CG-ROM 15 stores font data of characters (included in a prepared character set) as outline fonts.

Here, each unit 12a - 12f of the CPU 12 will be explained in detail. The display control unit 12a controls character display on the display 2 by outputting a display signal to the driver 18 according to the bitmap data stored in the image buffer 14b.

The print control unit 12b controls the tape printing employing the thermal head 4 and the tape feed motor 5, by outputting a motor driving signal to the driver 19 while outputting a print signal to the driver 20 according to the bitmap data stored in the image buffer 14b in sync with the motor driving signal.

The image developing unit 12c converts the character codes stored in the text buffer 14a into the bitmap data by referring to the font data stored in the CG-ROM 15.

The image developing unit 12c includes a separating point detecting unit 12c1. The separating point detecting unit 12c1 checks whether the character codes stored in the text buffer 14a include a point satisfying the separation condition stored in the separation condition storage unit 13a or not. If a point satisfying the separation condition is found, the separating point detecting unit 12c1 detects a separating point based on the point satisfying the separation condition. In this embodiment, the point satisfying the separation condition is detected as the separating point.

The print control unit 12b includes a character string separating unit 12b1. The character string separating unit 12b1 separates the character string (corresponding to the character codes stored in the text buffer 14a) at the separating points detected by the separating point detecting unit 12c1 while referring to a signal from the label position sensor 8 and thereby carries out print control for printing the separated character strings on different labels respectively. In other words, the character string separating unit 12bl successively outputs the bitmap data (obtained by developing each character of the character string into an image) from the image buffer 14b to the driver 20 while separating the bitmap data at the separating points.

The character string separating unit 12b1 is capable of changing the positions of the separated character strings (obtained by separating the original character string at the separating points) on the labels, based on the signal from the label position sensor 8. For example, the character string separating unit 12b1 is capable of changing the space between character strings printed on the die cut tape depending on the label pitch, changing the position of each character string on each label, etc. by which the tape printing device 1 can cope with various types of labels flexibly.

Incidentally, the separating point detecting unit 12c1 and the character string separating unit 12b1 function only when the tape identification unit 12e judges that the tape cassette loaded in the tape printing device 1 contains die cut tape. Therefore, the units 12c1 and 12b1 do not function when the tape identification unit 12e judges that the tape cassette contains normal long tape.

The separation condition alteration unit 12d writes the separation condition designated by the user into the separation condition storage unit 13a. When a separation condition has already been stored in the separation condition storage unit 13a, the separation condition alteration unit 12d overwrites the stored condition with the separation condition designated by the user.

The tape identification unit 12e judges whether the tape cassette loaded in the tape printing device 1 contains normal long tape or die cut tape based on a signal supplied from the tape type sensor 7.

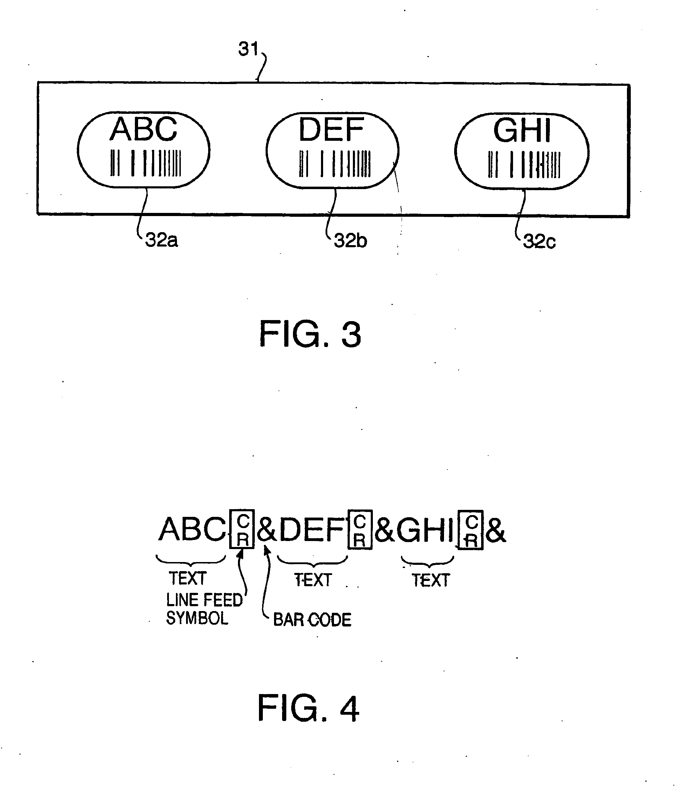

Here, a specific example of the label printing by the tape printing device 1 will be explained. On the print sheet of die cut tape 31 shown in Fig. 3, long and narrow labels 32a, 32b and 32c are arranged along the length of the die cut tape 31. On the label 32a, two lines, including a line of characters "ABC" and a line of bar code symbol, are printed. On the label 32b, two lines including a line of characters "DEF" and a line of bar code symbol are printed. On the label 32c, two lines including a line of characters "GHI" and a line of bar code symbol are printed.

In order to achieve the printout shown in Fig. 3 using the die cut tape 31, the separating point detecting unit 12c1 has to detect a point between the bar code symbol following the characters "ABC" and the characters "DEF", a point between the bar code symbol following the characters "DEF" and the characters "GHI", and a point between the bar code symbol following the characters "GHI" and the subsequent character string, as the separating points.

For this purpose, the separation condition storage unit 13a in this embodiment has stored a separation condition: the existence of a bar code symbol, and the separating point detecting unit 12c1 detects a point just after each bar code symbol as a separating point. In this case, the text buffer 14a of the RAM 14 has stored text data "ABC(CR)&DEF(CR)&GHI(CR)&" shown in Fig. 4. In the text data of Fig. 4, the characters "A", "B", "C", "D", "E", "F", "G" "H" and "I" denote character codes of corresponding characters respectively, the symbol "(CR)" denotes a character code meaning a line feed, and the symbol "&" denotes a character code meaning a bar code symbol.

When the code "(CR)" is detected in the character string, the image developing unit 12c starts a new line at the point. When the symbol "&" is detected in the character string by the separating point detecting unit 12c1, the character string separating unit 12b1 carries out the print control while referring to the signal from the label position sensor 8 so that a character string till the detected symbol "&" will be printed on a label and a character string starting just after the symbol "&" will be printed on another label. Consequently, when a print key of the keyboard 3 is pressed in a state in which the text data of Fig. 4 has been stored in the text buffer 14a, the three labels 32a, 32b and 32c shown in Fig. 3 are obtained.

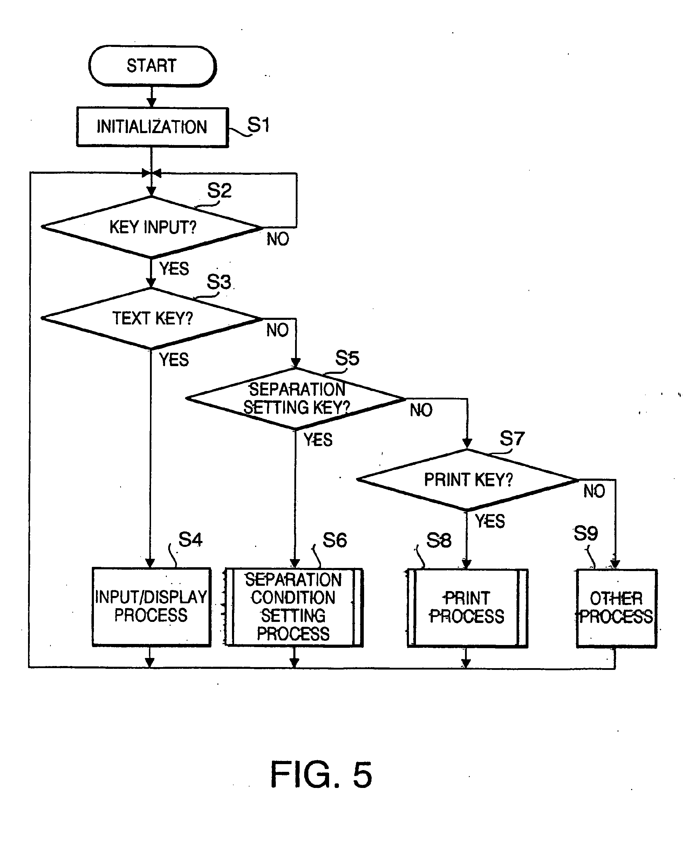

In the following, the operation of the tape printing device 1 will be described. Fig. 5 is a flow chart showing an overall process executed by the tape printing device 1. When the power of the tape printing device 1 is turned on, the whole tape printing device 1 is initialized in step S1 (hereinafter abbreviated as "S1", ditto for the following steps). Specifically, the operation check and initialization of the CPU 12, the RAM 14 and the I/O interface 16, the operation check of the display 2 and the thermal head 4 connected to the I/O interface 16, and the initialization of hardware are carried out. If no abnormality is found in the operation check and initialization, each functional unit and data stored in the RAM 14 are initialized. After the initialization is finished, an operation screen is displayed on the display 2 and thereafter the process advances to S2.

In S2, the CPU 12 waits for a key input by the user. In this step, the user can operate the tape printing device 1 (e.g. inputting text data to be stored in the text buffer 14a) by making key inputs to the keyboard 3 while seeing the operation screen on the display 2. The tape printing device 1 after the initialization stays on standby allowing text input, and the user can input characters and symbols to be printed by use of the text keys on the keyboard 3. Even in the input standby state, the user can call various functions by pressing functions keys such as the print key. When a key input is made by the user (S2: YES), a key code corresponding to the key input is stored in the RAM 14 and thereafter the process advances to S3.

In S3, whether the key pressed in the key input of S2 is a text input key or not is judged based on the key code corresponding to the key input. Here, the "text" means not only characters (alphabetical letters, kanji characters, Japanese syllabary characters, etc.) but also symbols such as the bar code symbols. If the pressed key is a text input key (S3: YES), the process advances to S4 and a text input/display process is executed. The text input process is a process for figuring out a character code corresponding to the key code stored in S2 and storing the character code in the text buffer 14a. The display process is a process for letting the image developing unit 12c develop the character code newly stored in the text buffer 14a, writing bitmap data (having a size suitable for display resolution of the display 2) obtained by the image developing unit 12c into the image buffer 14b, and letting the newly inputted character be displayed on the display 2 under the control of the display control unit 12a. By the display process, a newly inputted character is displayed at the right of an already-inputted character string on the display 2 each time when a new character is inputted. After the text input/display process of S4 is finished, the process returns to S2 and the CPU 12 waits for a key input by the user.

If the key pressed in S2 is not a text input key (S3: NO), the process advances to S5 and whether the key pressed in S2 is a separation setting key or not is judged. If the pressed key is the separation setting key (S5: YES), the process advances to S6 and a separation condition setting process is executed.

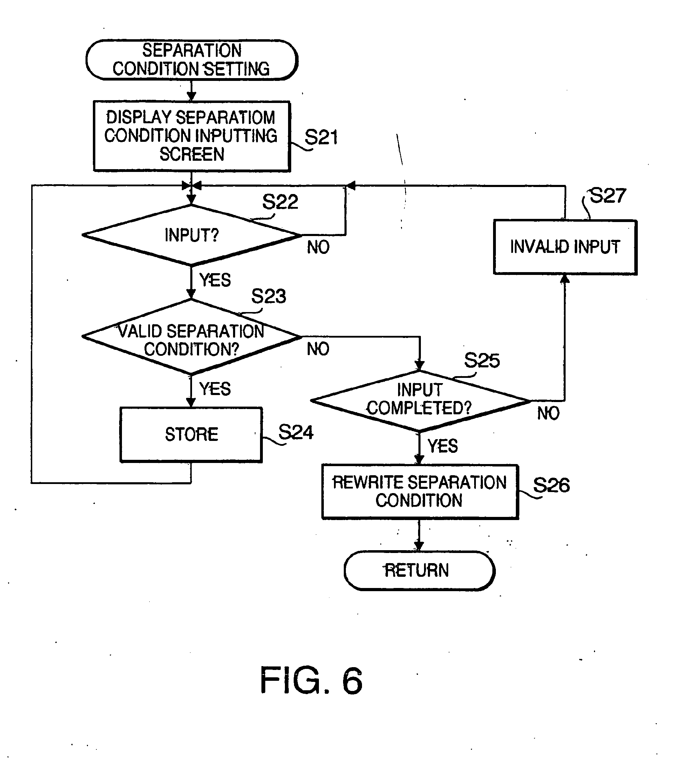

Fig. 6 is a flow chart showing the details of the separation condition setting process. In the first step S21 of the separation condition setting process, a separation condition inputting screen is displayed on the display 2. In the next S22, the CPU 12 waits for a key input by the user. The user makes a key input through the keyboard 3 while seeing the separation condition inputting screen on the display 2. When a key input is made (S22: YES), the process advances to S23 and whether the key pressed in S22 corresponds to a character or symbol forming a valid separation condition or not is judged. For example, the inputted character or symbol may be judged not to form a valid separation condition when the pressed key corresponds to an alphabetical letter.

If the inputted character or symbol is judged to form a valid separation condition (S23: YES), the process advances to S24 and the inputted character or symbol is stored in the RAM 14. Thereafter, the process returns to S22. On the other hand, if the inputted character or symbol is judged not to form a valid separation condition (S23: NO), the process advances to S25.

In S25, whether the key pressed in S22 is a separation condition completion key or not is judged. If the pressed key is the separation condition completion key (S25: YES), a character string which has been stored in the RAM 14 so far (forming a valid separation condition) is stored in the separation condition storage unit 13a (S26). In this step, when another separation condition has already been stored in the separation condition storage unit 13a, the stored separation condition is overwritten with the new separation condition. On the other hand, if the pressed key is not the separation condition completion key (S25: NO), the key input is judged to be invalid (S27) and the process returns to S22. By the above process, the user can store an optimum separation condition (suitable for the contents of printing) in the separation condition storage unit 13a.

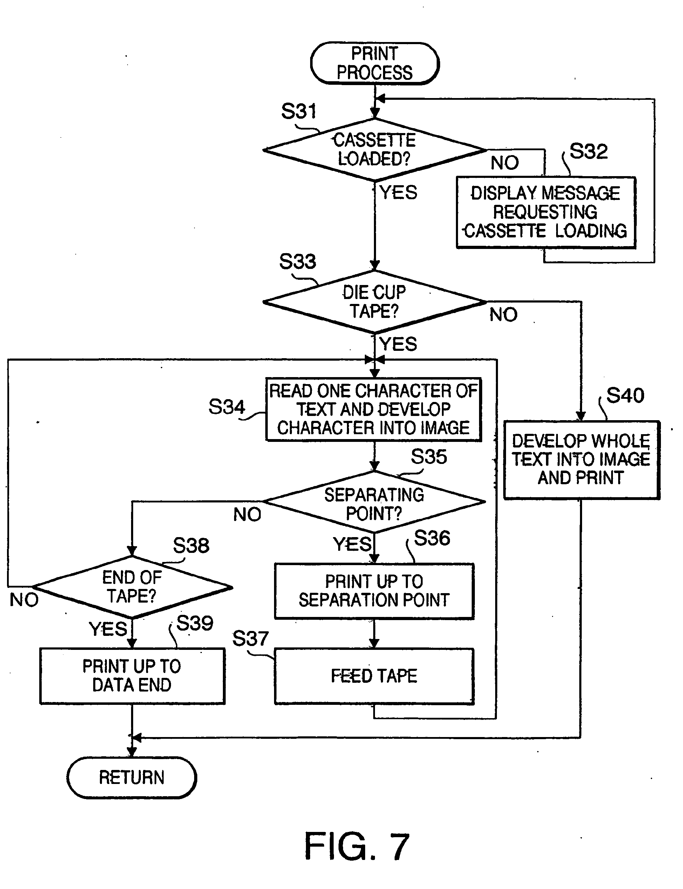

Returning to Fig. 5, if the key pressed in S2 is not the separation setting key (S5: NO), the process advances to S7 and whether the key pressed in S2 is the print key or not is judged. If the pressed key is the print key (S7: YES), the process advances to S8, in which a print image is generated and a print process is executed. In S8, all the character codes stored in the text buffer 14a are developed by the image developing unit 12c into bitmap data (having a size suitable for print resolution of the thermal head 4), the bitmap data is written into the image buffer 14b, and the printing of the bitmap data is executed by the thermal head 4 and the tape feed motor 5 under the control of the print control unit 12b. By the process of Fig. 7, a strip of print tape, on which all the characters stored in the image buffer 14b have been printed, is ejected from the outlet 6. After the print process of S8 is finished, the process returns to S2 and the CPU 12 waits for a key input by the user.

If the key pressed in S2 is not the print key (S7: NO), the process advances to S9 and other processes are executed. The "other processes" include processes corresponding to other function keys, processes corresponding to the cursor keys, etc. When the "other processes" are finished, the process returns to S2 and the CPU 12 waits for a key input by the user. The control system is turned off when a power switch of the tape printing device 1 is turned "OFF".

Next, the details of the print process of S8 will be described. Fig. 7 is a flow chart of the print process.

In the first step S31 of the print process, whether a tape cassette has been loaded in the tape printing device 1 or not is judged by the tape identification unit 12e based on the signal from the tape type sensor 7. If no tape cassette has been loaded yet (S31: NO), the process advances to S32 and the display control unit 12a displays a message (requesting the user to load a tape cassette in the tape printing device 1) on the display 2. If a tape cassette has already been loaded (S31: YES), the tape identification unit 12e judges whether the tape contained in the loaded tape cassette is die cut tape or not based on the signal from the tape type sensor 7 (S33). If the tape is die cut tape (S33: YES), the process advances to S34.

In S34, one of the character codes stored in the text buffer 14a is read out and the character code is converted by the image developing unit 12c into bitmap data by referring to the font data stored in the CG-ROM 15. The bitmap data is stored in the image buffer 14b of the RAM 14.

In the next S35, whether a separating point in the character string was detected by the separating point detecting unit 12c1 (when the character code was read out in S34) or not is judged. If a separating point was detected (S35: YES), the process advances to S36. In S36, after confirming that the front end of a label has already been placed at the prescribed position (based on the signal from the label position sensor 8), the character string separating unit 12b1 outputs the bitmap data stored in the image buffer 14b to the driver 20 which drives the thermal head 4. The bitmap data outputted in this step corresponds to character codes sandwiched between two separating points (or sandwiched between a separating symbol and the front/rear end of the character string), such as the characters "DEF" and the subsequent bar code symbol in the example of Fig. 3. By letting the print control unit 12b control the tape feed motor 5 to rotate in sync with the character string separating unit 12b1 outputting the bitmap data, a character string is printed on one label. After S36, the bitmap data stored in the image buffer 14b is discarded.

In the next S37, the tape is fed by the tape feed motor 5 until the front end of the next label (immediately on the upstream side of the label printed on in S36) is detected by the label position sensor 8, in order to place the front end of the next label at the prescribed position. Thereafter, the process returns to S34.

If no separating point was detected when the character code was read out in S34 (S35: NO), the process advances to S38. In S38, whether the end of the text data stored in the text buffer 14a was detected in the reading of a character code in S34 or not is judged. If the data end has not been detected (S38: NO), the process returns to S34.

If the data end has been detected (S38: YES), the process advances to S39. In S39, after confirming that the front end of the next label has already been placed at the prescribed position (based on the signal from the label position sensor 8), the character string separating unit 12b1 outputs the bitmap data stored in the image buffer 14b (corresponding to character codes sandwiched between the last separating position and the rear end of the character string stored in the text buffer 14a) to the driver 20 which drives the thermal head 4. By letting the print control unit 12b control the tape feed motor 5 to rotate in sync with the character string separating unit 12b1 outputting the bitmap data, a character string is printed on one label.

In S33, if the tape contained in the loaded tape cassette is not die cut tape but normal long tape (S33: NO), the process advances to S40. In S40, all the character codes stored in the text buffer 14a are read out and the character codes are converted by the image developing unit 12c into bitmap data by referring to the font data stored in the CG-ROM 15. Since the separating point detecting unit 12c1 does not function in this step as mentioned above, the character string stored in the text buffer 14a is not separated at all even when the character string includes a separating position satisfying the separation condition.

The bitmap data obtained by the above conversion is stored in the image buffer 14b of the RAM 14. Subsequently, the print control unit 12b outputs all the bitmap data stored in the image buffer 14b to the driver 20 which drives the thermal head 4. By letting the print control unit 12b control the tape feed motor 5 to rotate in sync with the outputting of the bitmap data, the character string is printed on one label.

As described above, by the embodiment, a plurality of character strings, obtained by separating the character string stored in the text buffer 14a at the separating points detected based on the separation condition, can be separately printed on different labels on die cut tape. Therefore, after the character string to be printed on a plurality of labels has been inputted in a lump, the user has only to press the print key once in order to complete the printing on a plurality of labels, by which the operation load on the user is reduced significantly.

The type of tape (die cut tape or normal long tape) is automatically judged, and the separation of the character string and the printing on a plurality of labels are carried out only when the tape contained in the tape cassette is die cut tape. Thus, irrespective of whether the tape to be printed on is die cut tape or normal long tape, printing suitable for the inputted character string and the type of the loaded tape can be performed automatically, without the need of any particular operation by the user to the tape printing device 1.

Further, since the separating point detecting unit 12c1 and the character string separating unit 12b1 are activated only after the loaded tape is identified as die cut tape, printing of a plurality of character strings (obtained by separating the original character string at separating points) on normal long tape can be prevented from occurring, by which wastage of tape due to erroneous tape loading is eliminated.

While a description has been given above of a preferred embodiment in accordance with the present invention, the present invention is not to be restricted by the particular illustrative embodiment and a variety of modifications, design changes, etc. are possible without departing from the scope of the present invention described in the appended claims. For example, while the bar code symbols are employed as label feed symbols in the above embodiment, it is also possible to employ other characters or symbols as the label feed symbols. As a modification of the above embodiment, the tape printing device may also be configured to regard a sequence of characters/symbols arranged in a prescribed order as the label feed symbol. Further, not only existing characters/symbols but also a character string exclusively for the label feed may be employed as the label feed symbol.

While the tape printing device in the above embodiment detects the separating positions by reading the character codes stored in the text buffer 14a one by one, the tape printing device may also be configured to read all the character codes from the text buffer 14a in a lump, convert the character codes in the image buffer 14b and store obtained data in the image buffer 14b, thereafter detect the separating positions, and carry out the separation into a plurality of character strings.

In an aspect of the present invention, the print control device is capable of printing not only on die cut tape (including a strippable sheet and a print sheet in the same shape which are bonded together) but also on label tape in which a plurality of labels are simply arranged on a strippable sheet along the length of the strippable sheet.

While the print control device in the above embodiment is installed in the tape printing device 1 capable of printing both on die cut tape and on normal long tape, in an aspect of the present invention, the print control device may also be installed in a tape printing device designed to print on die cut tape only. In an aspect of the present invention, the print control device is not necessarily built in a tape printing device but can also be implemented by a general-purpose computer.

As described above, by the embodiments in accordance with the present invention, after the character string to be printed on a plurality of labels has been inputted in a lump, the user has only to perform a print trigger operation (e.g. pressing of the print key) once in order to complete the printing on a plurality of labels, by which the operation load on the user can be reduced significantly.

According to the present invention, the print control device is characterized by: separation condition storage means for storing at least one selected from an editing code, a single character, a particular character string and a particular character string attribute as the separation condition; and alteration means for altering memory contents of the separation condition storage means.

By the above configuration, the user is allowed to select at least one of a suitable editing code, a suitable single character, a suitable character string and a suitable character string attribute as the separation condition depending on the purpose.

In an embodiment of the present invention, the print control device may further comprise: separation condition storage means for storing a particular character string or a particular character string attribute as the separation condition; and alteration means for altering memory contents of the separation condition storage means.

By the above configuration, the user is allowed to select a suitable character string or character string attribute as the separation condition depending on the purpose. Here, the "attribute" means a characteristic of a character such as being an alphabetical letter, being a half-size character (one-byte character), being a bar code symbol, etc.

In an embodiment of the present invention, the character string separating means may be configured to be able to change positions of the character strings, obtained by the separation at the separating points detected based on the separation condition, on the print medium. By such a configuration, each character string obtained by the separation can be printed at a proper position on the print medium.

In an embodiment of the present invention, the separation condition in the character string may be a condition indicating the separating points in the character string, and a character and/or symbol represented by the separation condition itself may be printed on the labels.

In an embodiment of the present invention, the separation condition in the character string may also be a condition used exclusively for indicating the separating points in the character string. In this case, no character or symbol represented by the separation condition itself is printed on the labels.

The functions of the print control devices described above can also be implemented by programs which are executed by a computer. Such programs, capable of letting a computer function as the above print control devices, achieve the same effects as the above print control devices. The programs can be delivered to the computer by storing them in a removable record medium (CD-ROM, FD, MO, etc.) or a fixed record medium (hard disk, etc.), or via a communication network (e.g. the Internet) by use of a wired or wireless telecommunication means.

According to the present invention, the print control method does comprise the step of altering the stored separation condition.

According to the present invention, the print control method does comprise the step of storing at least one selected from an editing code, a single character, a particular character string and a particular character string attribute as the separation condition.

In an embodiment of the present invention, the print control method may comprise the step of storing a particular character string or a particular character string attribute as the separation condition.

In an embodiment of the present invention, the print control method may further comprise the step of changing positions of the character strings, obtained by the separation at one or more separating points detected based on the separation condition, on the print medium.

In a print control method in accordance with an embodiment of the present invention, the separation condition in the character string may be a condition indicating one or more separating points in the character string, and a character and/or symbol represented by the separation condition itself may be printed on the labels.

In a print control method in accordance with an embodiment of the present invention, the separation condition in the character string may also be a condition used exclusively for indicating one or more separating points in the character string. In this case, no character or symbol represented by the separation condition itself is printed on the labels.

The above print control methods in accordance with embodiments of the present invention achieve the same effects as the print control devices described above.

## Claims

1. A print control device employed for printing a character string including characters and/or symbols on a plurality of labels arranged on a long tape-like print medium (31) along the length of the print medium, comprising:
character string storage means (14a) for storing a character string to be printed;
separating point detecting means (12c1) for detecting one or more separating points in the character string stored in the character string storage means based on a separation condition as a particular character string arrangement condition; and
character string separating means (12b1) for letting character strings, obtained by separating the character string stored in the character string storage means at the separating points detected by the separating point detecting means, be separately printed on different labels on the print medium;
**characterized by**:
separation condition storage means (13a) for storing at least one selected from an editing code, a single character, a particular character string and a particular character string attribute as the separation condition; and
alteration means (12d) for altering memory contents of the separation condition storage means.

2. The print control device according to claim 1, further comprising:
the separation condition storage means is adapted to store a particular character string or a particular character string attribute as the separation condition.

3. The print control device according to claim 1, wherein
the character string separating means is capable of changing positions of the character strings, obtained by the separation at the separating points detected based on the separation condition, on the print medium; or
the separation condition in the character string indicates the separating points in the character string and a character and/or symbol represented by the separation condition itself is printed on the labels; or
the separation condition in the character string is used exclusively for indicating the separating points in the character string and no character or symbol represented by the separation condition itself is printed on the labels.

4. A print control program employed for printing a character string including characters and/or symbols on a plurality of labels arranged on a long tape-like print medium (31) along the length of the print medium, wherein the program lets a computer function as:
character string storage means (14a) for storing a character string to be printed;
separating point detecting means (12c1) for detecting one or more separating points in the character string stored in the character string storage means based on a separation condition as a particular character string arrangement condition; and
character string separating means (12b1) for letting character strings, obtained by separating the character string stored in the character string storage means at the separating points detected by the separating point detecting means, be separately printed on different labels on the print medium;
**characterized in that** the program lets the computer function as:
separation condition storage means (13a) for storing at least one selected from an editing code, a single character, a particular character string and a particular character string attribute as the separation condition; and
alteration means (12d) for altering memory contents of the separation condition storage means.

5. The print control program according to claim 4, letting the computer function as:
separation condition storage means for storing a particular character string or a particular character string attribute as the separation condition.

6. The print control program according to claim 4, wherein
the character string separating means is capable of changing positions of the character strings, obtained by the separation at the separating points detected based on the separation condition, on the print medium; or
the separation condition in the character string indicates the separating points in the character string and a character and/or symbol represented by the separation condition itself is printed on the labels; or
the separation condition in the character string is used exclusively for indicating the separating points in the character string and no character or symbol represented by the separation condition itself is printed on the labels.

7. A print control method employed for printing a character string including characters and/or symbols on a plurality of labels arranged on a long tape-like print medium (31) along the length of the print medium, comprising the steps of:
storing a character string to be printed;
detecting a particular separation condition in the stored character string;
separating the character string based on the detected separation condition; and
separately printing character strings obtained by the separation on different labels on the print medium;
**characterized by**:
the step of storing at least one selected from an editing code, a single character, a particular character string and a particular character string attribute as the separation condition; and
the step of altering the stored separation condition.

8. The print control method according to claim 7, comprising the step of storing a particular character string or a particular character string attribute as the separation condition; or
comprising the step of changing positions of the character strings, obtained by the separation at one or more separating points detected based on the separation condition, on the print medium.

9. The print control method according to claim 7, wherein
the separation condition in the character string indicates one or more separating points in the character string and a characters and/or symbol represented by the separation condition itself is printed on the labels ; or
the separation condition in the character string is used exclusively for indicating one or more separating points in the character string and no character or symbol represented by the separation condition itself is printed on the labels.

## Patentansprüche

1. Drucksteuervorrichtung, die zum Drucken einer Zeichenkette einschließlich Zeichen und/oder Symbolen auf einer Vielzahl Etiketten verwendet wird, die an einem langen, bandartigen Druckmedium (31) entlang der Länge des Druckmediums angeordnet sind, mit:
einer Zeichenkettenspeichereinrichtung (14a) zum Speichern einer zu druckenden Zeichenkette;
einer Trennpunkterfassungseinrichtung (12c1) zum Erfassen von einem oder mehreren Trennpunkten in der Zeichenkette, die in der Zeichenkettenspeichereinrichtung gespeichert ist, und zwar auf der Grundlage einer Trennbedingung als eine besondere Zeichenkettenanordnungsbedingung; und
einer Zeichenkettentrenneinrichtung (12b1), damit Zeichenketten, die durch Trennen der in der Zeichenkettenspeichereinrichtung gespeicherten Zeichenkette an den Trennpunkten erhalten werden, die durch die Trennpunkterfassungseinrichtung erfasst werden, an unterschiedlichen Etiketten an dem Druckmedium separat gedruckt werden;
**gekennzeichnet durch**:
eine Trennbedingungsspeichereinrichtung (13a) zum Speichern zumindest eines/einer ausgewählten Editiercodes, einzigen Zeichens, besonderen Zeichenkette oder besonderen Zeichenkettenattributs als die Trennpunktbedingung; und
eine Änderungseinrichtung (12d) zum Ändern von Speicherinhalten der Trennbedingungsspeichereinrichtung.

2. Drucksteuervorrichtung gemäß Anspruch 1, des Weiteren mit:
der Trennbedingungsspeichereinrichtung, die dazu eingerichtet ist, eine besondere Zeichenkette oder ein besonderes Zeichenkettenattribut als die Trennbedingung zu speichern.

3. Drucksteuervorrichtung gemäß Anspruch 1, wobei die Zeichenkettentrenneinrichtung Positionen der Zeichenketten ändern kann, die durch die Trennung an den Trennpunkten erhalten werden, die auf der Grundlage der Trennbedingung erfasst werden, und zwar an dem Druckmedium; oder
die Trennbedingung in der Zeichenkette die Trennpunkte in der Zeichenkette angibt und ein Zeichen und/oder Symbol, das durch die Trennbedingung selbst dargestellt wird, auf den Etiketten gedruckt wird; oder
die Trennbedingung in der Zeichenkette ausschließlich zum Angeben der Trennpunkte in der Zeichenkette verwendet wird und kein Zeichen oder Symbol, das durch die Trennbedingung selbst dargestellt wird, auf den Etiketten gedruckt wird.

4. Drucksteuerprogramm, das zum Drucken einer Zeichenkette, die Zeichen und/oder Symbole enthält, auf einer Vielzahl Etiketten, die an einem langen, bandartigen Druckmedium (31) entlang der Länge des Druckmediums angeordnet sind, verwendet wird, wobei das Programm einen Computer veranlasst, als Folgendes zu dienen:
eine Zeichenkettenspeichereinrichtung (14a) zum Speichern einer zu druckenden Zeichenkette;
eine Trennpunkterfassungseinrichtung (12c1) zum Erfassen von einem oder mehreren Trennpunkten in der Zeichenkette, die in der Zeichenkettenspeichereinrichtung gespeichert ist, und zwar auf der Grundlage einer Trennbedingung als eine besondere Zeichenkettenanordnungsbedingung; und
eine Zeichenkettentrenneinrichtung (12b1), damit Zeichenketten, die durch Trennen der in der Zeichenkettenspeichereinrichtung gespeicherten Zeichenkette an den Trennpunkten erhalten werden, die durch die Trennpunkterfassungseinrichtung erfasst werden, an unterschiedlichen Etiketten an dem Druckmedium separat gedruckt werden;
**dadurch gekennzeichnet, dass** das Programm den Computer veranlasst, als Folgendes zu dienen:
eine Trennbedingungsspeichereinrichtung (13a) zum Speichern von zumindest eines/einer ausgewählten Editiercode, einzelnen Zeichens, besonderen Zeichenkette oder besonderen Zeichenkettenattributs als die Trennbedingung; und
eine Änderungseinrichtung (12d) zum Ändern von Speicherinhalten der Trennbedingungsspeichereinrichtung.

5. Drucksteuerprogramm gemäß Anspruch 4, die den Computer veranlasst, als Folgendes zu dienen:
eine Trennbedingungsspeichereinrichtung zum Speichern einer besonderen Zeichenkette oder eines besonderen Zeichenkettenattributs als die Trennbedingung.

6. Drucksteuerprogramm gemäß Anspruch 4, wobei
die Zeichenkettentrenneinrichtung Positionen der Zeichenketten, die durch die Trennung an den Trennpunkten erhalten werden, die auf der Grundlage der Trennbedingung erfasst werden, an dem Druckmedium ändern kann; oder
die Trennbedingung in der Zeichenkette die Trennpunkte in der Zeichenkette angibt und ein Zeichen und/oder Symbol, das durch die Trennbedingung selbst dargestellt wird, an den Etiketten gedruckt wird; oder
die Trennbedingung in der Zeichenkette ausschließlich zum Angeben der Trennpunkte in der Zeichenkette verwendet wird und kein Zeichen oder Symbol, das durch die Trennbedingung selbst dargestellt wird, an den Etiketten gedruckt wird.

7. Drucksteuerverfahren, das zum Drucken einer Zeichenkette einschließlich Zeichen und/oder Symbolen an einer Vielzahl von Etiketten verwendet wird, die an einem langen, bandartigen Druckmedium (31) entlang der Länge des Druckmediums angeordnet sind, mit den folgenden Schritten:
Speichern einer zu druckenden Zeichenkette;
Erfassen einer besonderen Trennbedingung in der gespeicherten Zeichenkette;
Trennen der Zeichenkette auf der Grundlage der erfassten Trennbedingung; und
separates Drucken der Zeichenketten, die durch die Trennung erhalten werden, an unterschiedlichen Etiketten an dem Druckmedium;
**gekennzeichnet durch**:
den Schritt zum Speichern zumindest eines/einer ausgewählten Editiercodes, einzigen Zeichens, besonderen Zeichenkette oder besonderen Zeichenkettenattributs als die Trennbedingung; und
den Schritt zum Ändern der gespeicherten Trennbedingung.

8. Drucksteuerverfahren gemäß Anspruch 7, mit dem Schritt zum Speichern einer besonderen Zeichenkette oder eines besonderen Zeichenkettenattributs als die Trennbedingung; oder
mit dem Schritt zum Ändern von Positionen der Zeichenketten, die durch die Trennung an einem oder mehreren Trennpunkten erhalten werden, die auf der Grundlage der Trennbedingung erfasst werden, an dem Druckmedium.

9. Drucksteuerverfahren gemäß Anspruch 7, wobei
die Trennbedingung in der Zeichenkette einen oder mehrere Trennpunkte in der Zeichenkette angibt und ein Zeichen und/oder Symbol, das durch die Trennbedingung selbst dargestellt wird, an den Etiketten gedruckt wird; oder
die Trennbedingung in der Zeichenkette ausschließlich zum Angeben von einem oder mehreren Trennpunkten in der Zeichenkette verwendet wird und kein Zeichen oder Symbol, das durch die Trennbedingung selbst dargestellt wird, an den Etiketten gedruckt wird.

## Revendications

1. Dispositif de contrôle d'impression utilisé pour imprimer une chaîne de caractères comprenant des caractères et/ou des symboles sur une pluralité d'étiquettes agencées sur un support d'impression en forme de longue bande (31) le long de la longueur du support d'impression, comprenant :
des moyens de mémorisation de chaîne de caractères (14a) pour mémoriser une chaîne de caractères à imprimer ;
des moyens de détection de point de séparation (12c1) pour détecter un ou plusieurs points de séparation dans la chaîne de caractères mémorisée dans les moyens de mémorisation de chaîne de caractères en fonction d'une condition de séparation en tant que condition d'agencement de chaîne de caractères particulière ; et
des moyens de séparation de chaîne de caractères (12b1) pour permettre aux chaînes de caractères, obtenues en séparant la chaîne de caractères mémorisée dans les moyens de mémorisation de chaîne de caractères au niveau des points de séparation détectés par les moyens de détection de point de séparation, d'être séparément imprimées sur différentes étiquettes sur le support d'impression ;
**caractérisé par** :
des moyens de mémorisation de condition de séparation (13a) pour mémoriser au moins l'un parmi un code d'édition, un caractère unique, une chaîne de caractères particulière et un attribut de chaîne de caractères particulier en tant que condition de séparation ; et
des moyens de modification (12d) pour modifier le contenu de mémoire des moyens de mémorisation de condition de séparation.

2. Dispositif de contrôle d'impression selon la revendication 1, comprenant en outre :
les moyens de mémorisation de condition de séparation sont adaptés pour mémoriser une chaîne de caractères particulière ou un attribut de chaîne de caractères particulier en tant que condition de séparation.

3. Dispositif de contrôle d'impression selon la revendication 1, dans lequel :
les moyens de séparation de chaîne de caractères peuvent changer les positions des chaînes de caractères, obtenues par la séparation au niveau des points de séparation détectés en fonction de la condition de séparation, sur le support d'impression ; ou bien
la condition de séparation dans la chaîne de caractères indique les points de séparation dans la chaîne de caractères et un caractère et/ou symbole représenté par la condition de séparation elle-même est imprimé sur les étiquettes ; ou bien
la condition de séparation dans la chaîne de caractères est exclusivement utilisée pour indiquer les points de séparation dans la chaîne de caractères et aucun caractère ni symbole représenté par la condition de séparation elle-même n'est imprimé sur les étiquettes.

4. Programme de contrôle d'impression utilisé pour imprimer une chaîne de caractères comprenant des caractères et/ou des symboles sur une pluralité d'étiquettes agencées sur un support d'impression en forme de longue bande (31) le long de la longueur du support d'impression, dans lequel le programme permettre à un ordinateur de fonctionner de la manière suivante :
des moyens de mémorisation de chaîne de caractères (14a) pour mémoriser une chaîne de caractères à imprimer ;
des moyens de détection de point de séparation (12c1) pour détecter un ou plusieurs points de séparation dans la chaîne de caractères mémorisée dans les moyens de mémorisation de chaîne de caractères en fonction d'une condition de séparation en tant que condition d'agencement de chaîne de caractères particulière ; et
des moyens de séparation de chaîne de caractères (12b1) pour permettre aux chaînes de caractères, obtenues en séparant la chaîne de caractères mémorisée dans les moyens de mémorisation de chaîne de caractères au niveau des points de séparation détectés par les moyens de détection de point de séparation, d'être imprimées séparément sur des étiquettes différentes sur le support d'impression ;
**caractérisé en ce que** le programme permet à l'ordinateur de fonctionner de la manière suivante :
des moyens de mémorisation de condition de séparation (13a) pour mémoriser au moins l'un parmi un code d'édition, un caractère unique, une chaîne de caractères particulière et un attribut de chaîne de caractères particulier en tant que condition de séparation ; et
des moyens de modification (12d) pour modifier le contenu de mémoire des moyens de mémorisation de condition de séparation.

5. Programme de contrôle d'impression selon la revendication 4, permettant à l'ordinateur de fonctionner de la manière suivante :
des moyens de mémorisation de condition de séparation pour mémoriser une chaîne de caractères particulière ou un attribut de chaîne de caractères particulier en tant que condition de séparation.

6. Programme de contrôle d'impression selon la revendication 4, dans lequel :
les moyens de séparation de chaîne de caractères peuvent modifier les positions des chaînes de caractères, obtenues par la séparation au niveau des points de séparation détectés en fonction de la condition de séparation, sur le support d'impression ; ou bien
la condition de séparation dans la chaîne de caractères indique les points de séparation dans la chaîne de caractères et un caractère et/ou symbole représenté par la condition de séparation elle-même est imprimé sur les étiquettes ; ou bien
la condition de séparation dans la chaîne de caractères est utilisée exclusivement pour indiquer les points de séparation dans la chaîne de caractères et aucun caractère ni symbole représenté par la condition de séparation elle-même n'est imprimé sur les étiquettes.

7. Procédé de commande d'impression utilisé pour imprimer une chaîne de caractères comprenant des caractères et/ou des symboles sur une pluralité d'étiquettes agencées sur un support d'impression en forme de longue bande (31) le long de la longueur du support d'impression, comprenant les étapes consistant à :
mémoriser une chaîne de caractères à imprimer ;
détecter une condition de séparation particulière dans la chaîne de caractères mémorisée ;
séparer la chaîne de caractères en fonction de la condition de séparation détectée ; et
imprimer séparément les chaînes de caractères obtenues par la séparation sur différentes étiquettes sur le support d'impression ;
**caractérisé par** :
l'étape consistant à mémoriser au moins l'un parmi un code d'édition, un caractère unique, une chaîne de caractères particulière et un attribut de chaîne de caractères particulier en tant que condition de séparation ; et
l'étape consistant à modifier la condition de séparation mémorisée.

8. Procédé de contrôle d'impression selon la revendication 7, comprenant l'étape consistant à mémoriser une chaîne de caractères particulière ou un attribut de chaîne de caractères particulier en tant que condition de séparation ;
comprenant l'étape consistant à modifier les positions des chaînes de caractères obtenues par la séparation au niveau d'un ou plusieurs points de séparation détectés en fonction de la condition de séparation, sur le support d'impression.

9. Procédé de contrôle d'impression selon la revendication 7, dans lequel :
la condition de séparation dans la chaîne de caractères indique un ou plusieurs points de séparation dans la chaîne de caractères et un caractère et/ou symbole représenté par la condition de séparation elle-même est imprimé sur les étiquettes ; ou bien
la condition de séparation dans la chaîne de caractères est exclusivement utilisée pour indiquer un ou plusieurs points de séparation dans la chaîne de caractères et aucun caractère ni symbole représenté par la condition de séparation elle-même n'est imprimé sur les étiquettes.
